# EUROPEAN PATENT APPLICATION

(11) **EP 4 721 977 A1**
(43) Date of publication of application: **08.04.2026**
(21) Application number: 24818977.1
(22) Date of filing: 29.02.2024
(51) Int. Cl.: B32B 27/00, B32B 3/30, B32B 27/20, B32B 27/30, B32B 27/38, E04F 13/07, E04F 13/08

(54) **DECORATIVE SHEET AND DECORATIVE MATERIAL**

(30) Priority: 05.06.2023 JP 2023092349; 05.06.2023 JP 2023092350
(71) Applicant: Toppan Holdings Inc., Tokyo 110-0016 (JP)
(72) Inventor: INOUE Ayaka, Tokyo 110-0016 (JP); SAGAWA Koichi, Tokyo 110-0016 (JP)
(74) Representative: TBK
(86) International application number: PCT/JP2024/007585
(87) International publication number: WO 2024/252738

(57) **Abstract**

A decorative material (10) includes a substrate (7), and a decorative sheet (1) laminated on one surface of the substrate (7). The decorative sheet (1) includes a substrate layer (2), an aggregate layer (3), a print pattern layer (4), and a surface protective layer (5). The aggregate layer (3) contains a mixture of an acrylic resin and an inorganic filler such that a mixing ratio of the acrylic resin with respect to 100 mass% of the aggregate layer (3) is in a range of 5 mass% or more and 15 mass% or less and a mixing ratio of the inorganic filler with respect to 100 mass% of the aggregate layer (3) is in a range of 85 mass% or more and 95 mass% or less. The aggregate layer (3) has a thickness in a range of 0.2 mm or more and 4.0 mm or less. The inorganic filler contains a filler having a particle size distribution in a range of 50 µm or more and 500 µm or less.

## Description

### [Technical Field]

The present invention relates to a decorative sheet and a decorative material.

### [Background Art]

Decorative materials for decorating wall surfaces and floor surfaces of buildings and the like include, for example, a decorative material configured as disclosed in Patent Literature 1. The decorative material configured as disclosed in Patent Literature 1 includes a sheet material containing a synthetic resin, an aggregate, and an endothermic material, and a surface protective layer that is laminated on one surface of the sheet material and is composed of an inorganic resin or an organic resin containing an inorganic nano filler.

### [Citation List]

### [Patent Literature]

[PTL 1] JP 2021-079630 A

### [Summary of the Invention]

### [Technical Problem]

As typical decorative materials including the decorative material disclosed in Patent Literature 1, for example, decorative materials having a stone-like appearance include sheets printed with a stone pattern and plastering materials; however, such surface materials merely have a stone-like appearance different in design from the appearance of natural stone. Thus, in order to allow a decorative sheet and a decorative material to produce the atmosphere of natural stone, the decorative sheet and the decorative material may be formed using cut natural stone.

However, the formation of a decorative sheet and a decorative material using natural stone is difficult due to weight and the like. Furthermore, a decorative material formed using natural stone has lower conformity to a curved surface of a cylinder or the like; thus, the surface (design surface) of the decorative sheet is easily damaged, leading to deterioration in designability. Therefore, it is difficult to form a decorative sheet and a decorative material having high designability.

In view of the above problem, an object of the present invention is to provide a decorative sheet and a decorative material capable of preventing deterioration in designability.

### [Solution to Problem]

In order to solve the above problem, an aspect of the present invention is a decorative sheet including a substrate layer, an aggregate layer, a print pattern layer, and a surface protective layer. The aggregate layer is laminated on one surface of the substrate layer. The print pattern layer is laminated on a surface of the aggregate layer opposite to a surface of the aggregate layer facing the substrate layer. The surface protective layer is laminated on a surface of the print pattern layer opposite to a surface of the print pattern layer facing the aggregate layer. The aggregate layer contains a mixture of an acrylic resin and an inorganic filler such that a mixing ratio of the acrylic resin with respect to 100 mass% of the aggregate layer is in a range of 5 mass% or more and 15 mass% or less and a mixing ratio of the inorganic filler with respect to 100 mass% of the aggregate layer is in a range of 85 mass% or more and 95 mass% or less. The aggregate layer has a thickness in a range of 0.2 mm or more and 4.0 mm or less. Furthermore, the inorganic filler contains a filler having a particle size distribution in a range of 50 µm or more and 500 µm or less.

In order to solve the above problem, an aspect of the present invention is a decorative material including: a substrate; and the decorative sheet that is laminated on at least one surface of the substrate.

### [Advantageous Effects of the Invention]

An aspect of the present invention provides a decorative sheet and a decorative material capable of preventing deterioration in designability.

### [Brief Description of the Drawings]

Fig. 1 is a cross-sectional view of a configuration of a decorative sheet and a decorative material according to a first embodiment.
Fig. 2 is a diagram showing an example of a pattern formed on a print pattern layer.
Fig. 3 is a diagram showing a modification of the pattern formed on the print pattern layer.
Fig. 4 is a cross-sectional view of a configuration of a decorative sheet and a decorative material according to a modification of the first embodiment.

### [Description of the Embodiments]

Embodiments of the present technique will be described with reference to the drawings. In the drawings, the same or similar components are denoted by the same or similar reference signs, and redundant description is omitted. The drawings are schematic and may not be to scale. The embodiments described below exemplify devices and methods for embodying the technical idea of the present technique, and do not specify the technical idea of the present technique to the devices and methods exemplified in the following embodiments. The technical idea of the present technique can be variously modified within the technical scope described in the claims. In the following description, directions "left and right" and "up and down" are merely defined for convenience of description, and do not limit the technical idea of the present invention. Thus, for example, when the paper sheet is rotated by 90 degrees, "left and right" and "up and down" are interchanged, and when the paper sheet is rotated by 180 degrees, "left" is changed to "right" and "right" is changed to "left".

### (First embodiment)

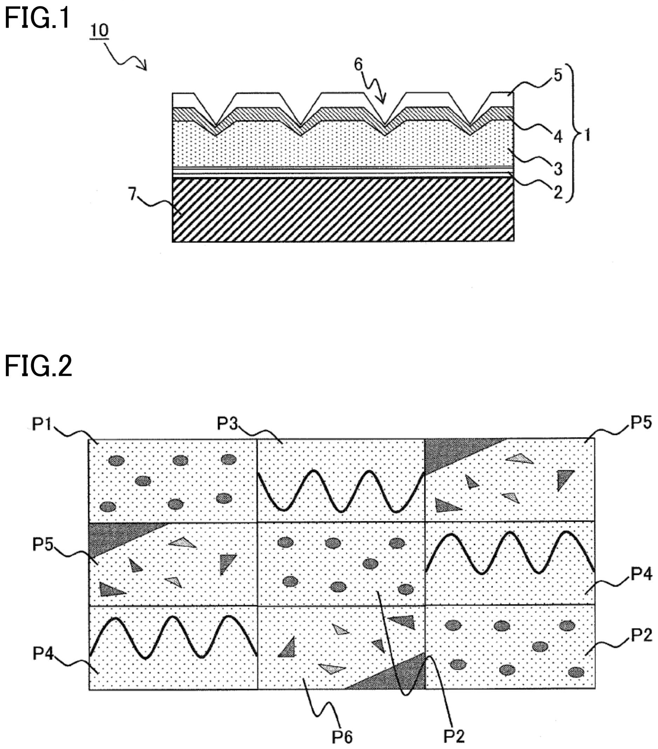

A configuration of a decorative sheet 1 according to a first embodiment will be described with reference to Fig. 1.

As shown in Fig. 1, the decorative sheet 1 includes a substrate layer 2, an aggregate layer 3, a print pattern layer 4, and a surface protective layer 5.

### <Substrate layer>

The substrate layer 2 serves as a substrate of the decorative sheet 1.

In the first embodiment, a case will be described as an example in which the substrate layer 2 is composed of a glass nonwoven fabric having a basis weight of 48 [g/m²].

### <Aggregate layer>

The aggregate layer 3 is laminated on one surface (upper surface in Fig. 1) of the substrate layer 2, and contains a mixture of an acrylic resin and an inorganic filler.

The basis weight of the mixture of the acrylic resin and the inorganic filler is approximately 2200 [g/m²].

The mixing ratio of the acrylic resin with respect to 100 mass [%] of the aggregate layer 3 is in the range of 5 mass [%] or more and 15 mass [%] or less.

The acrylic resin has a glass transition point in the range of -40 [°C] or higher and 10 [°C] or lower.

The mixing ratio of the inorganic filler with respect to 100 mass [%] of the aggregate layer 3 is in the range of 85 mass [%] or more and 95 mass [%] or less.

The inorganic filler contains a filler having a particle size distribution (average particle size distribution) in the range of 50 [µm] or more and 500 [µm] or less.

Furthermore, at least one of the components of the inorganic filler is a hydrate.

In the first embodiment, a case will be described as an example in which the components of the inorganic filler are calcium carbonate and aluminum hydroxide.

The aggregate layer 3 has a thickness in the range of 0.2 [mm] or more and 4.0 [mm] or less.

### <Print pattern layer>

The print pattern layer 4 is laminated on one surface (upper surface in Fig. 1) of the aggregate layer 3.

The print pattern layer 4 contains an epoxy resin as a main component.

Furthermore, the print pattern layer 4 contains an inorganic pigment such that the mixing ratio of the inorganic pigment with respect to 100 mass [%] of epoxy resin is 15 mass [%] or less.

The print pattern layer 4 is formed by inkjet printing.

Furthermore, a pattern is formed by printing on the print pattern layer 4.

The pattern formed on the print pattern layer 4 is composed of at least three types of different patterns formed based on image data produced using a natural stone pattern (image data produced by imitating a natural stone pattern).

In the first embodiment, a case will be described as an example in which as shown in Fig. 2, the pattern formed on the print pattern layer 4 is, for example, composed of six or more types of different patterns formed based on image data.

Specifically, the pattern shown in Fig. 2 is composed of six types of different patterns (P1, P2, P3, P4, P5, P6) formed based on image data produced using a natural stone pattern. The pattern shown in Fig. 2 schematically shows the patterns formed based on image data produced using a natural stone pattern.

The pattern P1 and the pattern P2 are obtained by horizontally inverting the same pattern. The pattern P3 and the pattern P4 are obtained by vertically inverting the same pattern. Furthermore, the pattern P5 and the pattern P6 are obtained by vertically and horizontally inverting the same pattern.

### <Surface protective layer>

The surface protective layer 5 is laminated on one surface (upper surface in Fig. 1) of the print pattern layer 4, and is provided to enable the decorative sheet 1 to have functions such as weather resistance, scratch resistance, stain resistance, and designability.

The surface protective layer 5 has a thickness in the range of 3 [µm] or more and 10 [µm] or less.

The surface protective layer 5 contains, as a main component, acryl, fluorine, silicone, or a mixture or copolymer of at least two of acryl, fluorine, and silicone.

Furthermore, the surface protective layer 5 contains silica (matting agent) such that the mixing ratio of the silica with respect to 100 mass [%] of main component is in the range of 10 mass [%] or more and 50 mass [%] or less.

Due to the configuration described above, the surface (upper surface in Fig. 1) of the surface protective layer 5 opposite to the surface of the surface protective layer 5 facing the print pattern layer 4 has a three-dimensional surface roughness skewness (Ssk) in the range of -0.5 or more and 2.0 or less.

That is, the outermost surface of the decorative sheet 1 has a three-dimensional surface roughness skewness (Ssk) in the range of -0.5 or more and 2.0 or less.

### <Embossed portion>

As shown in Fig. 1, embossed portions 6 are formed at a plurality of positions in the aggregate layer 3, the print pattern layer 4, and the surface protective layer 5. That is, the aggregate layer 3, the print pattern layer 4, and the surface protective layer 5 are subjected to embossing processing.

Embossing processing is performed by debossing using an embossing die. The embossing die is shaped using natural stone as a shape model. The embossing die may be formed using a 3D printer or a plastering material.

Specifically, embossing processing is performed to the aggregate layer 3 of the sheet in which the aggregate layer 3 is laminated on one surface of the substrate layer 2. After formation of recessed portions corresponding to the embossed portions 6 in the aggregate layer 3, the print pattern layer 4 and the surface protective layer 5 are formed; thus, the aggregate layer 3, the print pattern layer 4, and the surface protective layer 5 are subjected to embossing processing. Therefore, the embossed portions 6 are formed in the aggregate layer 3, the print pattern layer 4, and the surface protective layer 5.

### (Decorative material)

A decorative material 10 is, for example, a panel that decorates a building wall surface, and includes the decorative sheet 1 and a substrate 7.

The substrate 7 has a plate shape and is, for example, composed of a wooden board, an inorganic board, a metal plate, or the like. The decorative sheet 1 is laminated on one surface (upper surface in Fig. 1) of the substrate 7. That is, the decorative material 10 includes the substrate 7, and the decorative sheet 1 laminated on one surface of the substrate 7.

The first embodiment is an example of the present invention, and the present invention is not limited to the first embodiment, and can be variously modified according to design or the like without departing from the technical idea of the present invention.

### (Effects of first embodiment)

The decorative sheet 1 of the first embodiment achieves the following effects.
(1) The aggregate layer 3 contains a mixture of an acrylic resin and an inorganic filler such that the mixing ratio of the acrylic resin with respect to 100 mass [%] of the aggregate layer 3 is in the range of 5 mass [%] or more and 15 mass [%] or less and the mixing ratio of the inorganic filler with respect to 100 mass [%] of the aggregate layer 3 is in the range of 85 mass [%] or more and 95 mass [%] or less. The aggregate layer 3 has a thickness in the range of 0.2 [mm] or more and 4.0 [mm] or less. Furthermore, the inorganic filler contains a filler having a particle size distribution in the range of 50 [µm] or more and 500 [µm] or less.

Thus, when the mixing ratio of the mixture of the acrylic resin and the inorganic filler with respect to the aggregate layer 3 is in the above range and the particle size distribution of the inorganic filler is in the above range, the surface of the decorative sheet 1 can have a gloss and texture similar to those of natural stone.

Therefore, the surface of the decorative sheet 1 can have a design similar to that of a natural product mainly composed of an inorganic material such as natural stone, thus making it possible to provide the decorative sheet 1 capable of preventing deterioration in designability.

Furthermore, when the thickness of the aggregate layer 3 is in the range of 0.2 [mm] or more and 4.0 [mm] or less, the decorative sheet 1 can have higher conformity to a curved surface of a cylinder or the like.

As a result, it is possible to prevent the decorative sheet 1 from having lower curved surface conformity, thus making it possible to prevent damage to the surface (design surface) of the decorative sheet 1, preventing deterioration in designability.

In formation of a decorative sheet and a decorative material using natural stone, a sheet may be formed by pouring resin on the natural stone and peeling off a long thin surface layer strip from the natural stone; however, in this case, air bubbles are occurred on the surface of the sheet after peeling off. Furthermore, in formation of a decorative sheet and a decorative material using natural stone, the occurrence of undesired foreign matter contamination or undesired flow or pattern makes it difficult to prepare the desired number of sheets having a desired design.

On the other hand, the decorative sheet 1 of the first embodiment makes it possible to prevent occurrence of air bubbles and prepare the desired number of sheets having a desired design.

(2) The surface of the surface protective layer 5 opposite to the surface of the surface protective layer 5 facing the print pattern layer 4 has a three-dimensional surface roughness skewness (Ssk) in the range of -0.5 or more and 2.0 or less.

Thus, the surface of the decorative sheet 1 can have a tactile sensation similar to that of a natural product mainly composed of an inorganic material such as natural stone.

(3) The aggregate layer 3, the print pattern layer 4, and the surface protective layer 5 are subjected to embossing processing by debossing.

Thus, when the embossed portions 6 are formed in the aggregate layer 3, the print pattern layer 4, and the surface protective layer 5, it is possible to form an uneven pattern on the decorative sheet 1 and enable the surface of the decorative sheet 1 to have a design similar to that of natural stone, allowing the decorative sheet 1 to have higher designability.

Furthermore, when debossing is performed using an embossing die shaped using natural stone as a shape model, the surface of the decorative sheet 1 can have a design more similar to that of natural stone.

(4) The acrylic resin has a glass transition point in the range of -40 [°C] or higher and 10 [°C] or lower.

Thus, when the glass transition point of the acrylic resin is -40 [°C] or higher, it is possible to prevent reduction in adhesion over time of the print pattern layer 4, as compared with the case where the glass transition point of the acrylic resin is lower than -40 [°C]. In addition, when the glass transition point of the acrylic resin is 10 [°C] or lower, the decorative sheet 1 can have higher curved surface conformity, as compared with the case where the glass transition point of the acrylic resin exceeds 10 [°C].

(5) The surface protective layer 5 contains, as a main component, acryl, fluorine, silicone, or a mixture or copolymer of at least two of acryl, fluorine, and silicone.

Thus, the surface protective layer 5 can have weather resistance.

(6) The surface protective layer 5 has a thickness in the range of 3 [µm] or more and 10 [µm] or less.

Thus, when the thickness of the surface protective layer 5 is 3 [µm] or more, the surface protective layer 5 can have sufficient scratch resistance, as compared with the case where the thickness of the surface protective layer 5 is less than 3 [µm]. In addition, when the thickness of the surface protective layer 5 is 10 [µm] or less, the decorative sheet 1 can have higher curved surface conformity, as compared with the case where the thickness of the surface protective layer 5 exceeds 10 [µm].

(7) At least one of the components of the inorganic filler is a hydrate.

Thus, when a hydrate is used as a component of the inorganic filler, even if the decorative sheet 1 is subjected to combustion, water can be generated by heat produced during combustion, leading to a lower calorific value.

(8) The print pattern layer 4 contains an epoxy resin as a main component, and contains an inorganic pigment such that the mixing ratio of the inorganic pigment with respect to 100 mass% of epoxy resin is 15 mass% or less.

Thus, when the print pattern layer 4 contains an inorganic pigment, the decorative sheet 1 can have sufficient weather resistance for outdoor use.

(9) The pattern formed by printing on the print pattern layer 4 is composed of six or more types of different patterns formed based on image data produced using a natural stone pattern.

This makes it difficult for a viewer to notice that the pattern formed on the print pattern layer 4 includes the same pattern portions; thus, the installed decorative sheet 1 has a natural design decoration and can have a more natural design.

(10) The print pattern layer 4 is formed by inkjet printing.

This makes it difficult for a viewer to notice that the pattern formed on the print pattern layer 4 includes the same pattern portions; thus, the installed decorative sheet 1 has a natural design decoration and can have a more natural design.

The decorative material 10 of the first embodiment achieves the following effects.

(11) The decorative material 10 includes the substrate 7, and the decorative sheet 1 laminated on at least one surface of the substrate 7.

This makes it possible to provide the decorative material 10 capable of preventing deterioration in designability.

### <Modifications of first embodiment>

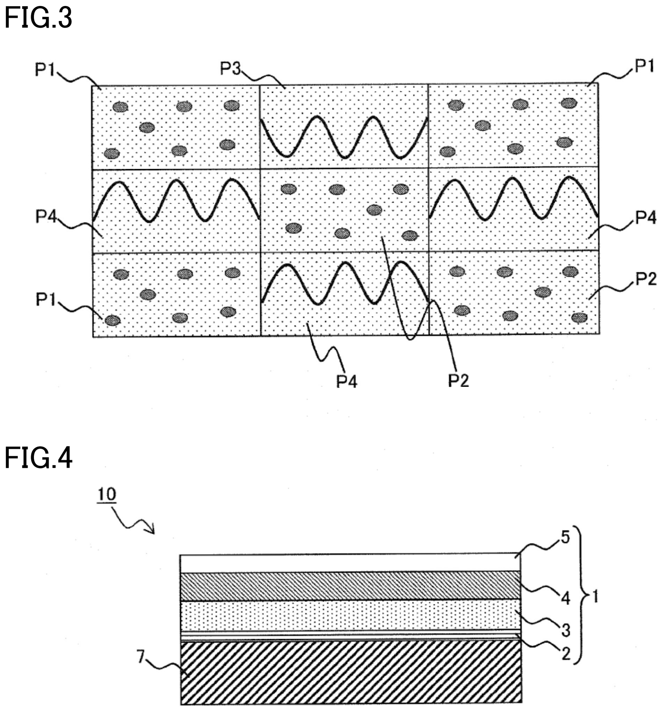

(1) In the first embodiment, the pattern formed by printing on the print pattern layer 4 is composed of six or more types of different patterns formed based on image data produced using a natural stone pattern; however, the pattern formed by printing on the print pattern layer 4 is not limited to this. That is, for example, as shown in Fig. 3, the pattern formed by printing on the print pattern layer 4 may be composed of four types of different patterns formed based on image data produced using a natural stone pattern. Thus, the pattern formed by printing on the print pattern layer 4 may be composed of at least three types of different patterns formed based on image data produced using a natural stone pattern.

Specifically, the pattern shown in Fig. 3 is composed of four types of different patterns (P1, P2, P3, P4) formed based on image data produced using a natural stone pattern.

This configuration also makes it difficult for a viewer to notice that the pattern formed on the print pattern layer 4 includes the same pattern portions; thus, the decorative sheet 1 used in construction has a natural design decoration and can have a more natural design.

(2) In the first embodiment, the decorative sheet 1 is configured to have the embossed portions 6; however, the decorative sheet 1 is not limited to this. That is, for example, as shown in Fig. 4, the decorative sheet 1 may be configured to have no embossed portions.

### (Second embodiment)

A configuration of the decorative sheet 1 according to a second embodiment will be described with reference to Figs. 1 to 4.

The decorative sheet 1 of the second embodiment has the same configuration as the decorative sheet 1 of the first embodiment, except for the configuration of the surface protective layer 5. Thus, in the following, only the surface protective layer 5 will be described.

### <Surface protective layer>

The surface protective layer 5 is laminated on one surface (upper surface in Fig. 1) of the print pattern layer 4, and is provided to enable the decorative sheet 1 to have functions such as weather resistance, scratch resistance, stain resistance, and designability.

The surface protective layer 5 has a thickness in the range of 3 [µm] or more and 10 [µm] or less.

The surface protective layer 5 contains, as a main component, acryl, fluorine, silicone, or a mixture or copolymer of at least two of acryl, fluorine, and silicone.

Furthermore, the surface protective layer 5 contains silica (matting agent) such that the mixing ratio of the silica with respect to 100 mass [%] of main component is in the range of 10 mass [%] or more and 50 mass [%] or less.

Due to the configuration described above, the surface (upper surface in Fig. 1) of the surface protective layer 5 opposite to the surface of the surface protective layer 5 facing the print pattern layer 4 has a surface kurtosis (Sku) in the range of 3.0 or more and 30 or less. The surface kurtosis is a value representing height distribution, and may be referred to as "kurtosis".

That is, the outermost surface of the decorative sheet 1 has a surface kurtosis (Sku) in the range of 3.0 or more and 30 or less.

### (Effects of second embodiment)

The decorative sheet 1 of the second embodiment achieves the following effects.
(1) The surface of the surface protective layer 5 opposite to the surface of the surface protective layer 5 facing the print pattern layer 4 has a surface kurtosis (Sku) in the range of 3.0 or more and 30 or less.

Thus, the surface of the decorative sheet 1 can have a gloss and texture similar to those of natural stone.

Therefore, the surface of the decorative sheet 1 can have a design similar to that of a natural product mainly composed of an inorganic material such as natural stone, thus making it possible to provide the decorative sheet 1 capable of preventing deterioration in designability.

Furthermore, the surface of the decorative sheet 1 can have a tactile sensation similar to that of a natural product mainly composed of an inorganic material such as natural stone.

Thus, as in the first embodiment, the decorative sheet 1 of the second embodiment makes it possible to prevent occurrence of air bubbles and prepare the desired number of sheets having a desired design.

### First Examples

With reference to the first embodiment, decorative sheets of Examples 1 to 12, decorative sheets of Comparative Examples 1 and 2, and a decorative sheet of Reference Example will be described.

### (Example 1)

A substrate layer was formed using a glass nonwoven fabric having a basis weight of 48 [g/m²].

An aggregate layer was formed by adding an inorganic filler to an acrylic resin (acrylic emulsion) having a glass transition point of 60 [°C] so that the solid content weight ratio between the acrylic resin and the inorganic filler during drying was 10:90. A higher glass transition point indicates lower fluidity and higher hardness. On the other hand, a lower glass transition point indicates higher fluidity and higher flexibility.

The inorganic filler was composed of calcium carbonate (CaCO₃) having a particle size distribution in the range of 100 [µm] or more and 500 [µm] or less. The calcium carbonate having a particle size distribution in the above range was obtained by sieving calcium carbonate and collecting calcium carbonate particles that passed through a 500-µm mesh but did not pass through a 100-µm mesh.

After the aggregate layer was uniformly applied to the substrate layer and then dried to form a sheet having a thickness of 2.0 [mm], a print pattern layer was formed on the surface (aggregate layer) of the sheet by gravure offset printing using an organic pigment.

Furthermore, a pattern was formed on the print pattern layer using four types of patterns (see Fig. 2).

A surface protective layer having a thickness of 15 [µm] was formed using an acrylic resin.

Furthermore, the surface protective layer contained silica such that the mixing ratio of the silica with respect to 100 mass [%] of acrylic resin as a main component was 50 mass [%].

Thus, the decorative sheet of Example 1 was formed.

### (Example 2)

The decorative sheet of Example 2 was formed in the same manner as in Example 1 except that before drying was performed after application of the aggregate layer to the substrate layer, the aggregate layer was subjected to embossing processing using an embossing die made of silicone.

### (Example 3)

The decorative sheet of Example 3 was formed in the same manner as in Example 1 except that the aggregate layer was formed using an acrylic resin having a glass transition point of -7 [°C].

### (Example 4)

The decorative sheet of Example 4 was formed in the same manner as in Example 1 except that the aggregate layer was formed using an acrylic resin having a glass transition point of -62 [°C].

### (Example 5)

The decorative sheet of Example 5 was formed in the same manner as in Example 1 except that the thickness of the surface protective layer was 2 [µm].

### (Example 6)

The decorative sheet of Example 6 was formed in the same manner as in Example 1 except that the thickness of the surface protective layer was 3 [µm].

### (Example 7)

The decorative sheet of Example 7 was formed in the same manner as in Example 1 except that the thickness of the surface protective layer was 5 [µm].

### (Example 8)

The decorative sheet of Example 8 was formed in the same manner as in Example 1 except that the thickness of the surface protective layer was 10 [µm].

### (Example 9)

The decorative sheet of Example 9 was formed in the same manner as in Example 1 except that the inorganic filler was composed of calcium carbonate (CaCO₃) having a particle size distribution in the range of 50 [µm] or more and 500 [µm] or less and aluminum hydroxide (Al(OH)₃) having a particle size distribution in the range of 50 [µm] or more and 500 [µm] or less and that the calcium carbonate and the aluminum hydroxide were added to the acrylic resin such that the solid content weight ratio between the acrylic resin, the calcium carbonate, and the aluminum hydroxide during drying was 10:45:45. As with the calcium carbonate, the aluminum hydroxide having a particle size distribution in the above range was obtained by sieving aluminum hydroxide and collecting aluminum hydroxide particles that passed through a 500-µm mesh but did not pass through a 50-µm mesh.

### (Example 10)

The decorative sheet of Example 10 was formed in the same manner as in Example 1 except that the print pattern layer was formed using an organic pigment.

### (Example 11)

The decorative sheet of Example 11 was formed in the same manner as in Example 1 except that the pattern on the print pattern layer was formed using six types of patterns (see Fig. 3).

### (Example 12)

The decorative sheet of Example 12 was formed in the same manner as in Example 1 except that the print pattern layer was formed by inkjet printing.

### (Comparative Example 1)

The decorative sheet of Comparative Example 1 was formed in the same manner as in Example 1 except that the inorganic filler was composed of calcium carbonate having a particle size distribution in the range of 1 [µm] or more and 10 [µm] or less.

### (Comparative Example 2)

The decorative sheet of Comparative Example 2 was formed in the same manner as in Example 1 except that the inorganic filler was composed of calcium carbonate having a particle size distribution in the range of more than 500 [µm] and 1000 [µm] or less.

### (Reference Example)

The decorative sheet of Reference Example was formed using a cut natural stone.

### (Performance evaluation, evaluation results)

Each of the decorative sheets of Examples 1 to 12, the decorative sheets of Comparative Examples 1 and 2, and the decorative sheet of Reference Example was evaluated for designability, curved surface conformity, and three-dimensional surface roughness skewness (Ssk). In addition, the decorative sheets were evaluated for a glossiness value, ink adhesion, weather resistance, scratch resistance, fire resistance, and printability. The evaluation results are shown in Tables 1 and 2.

The evaluation was performed in the following manner.

### <Designability>

In the evaluation for designability, the decorative sheets were evaluated for designability evaluated by sensory evaluation and designability evaluated based on unnaturalness due to pattern repetition (unnaturalness caused by a succession of the same pattern portions).

In the evaluation for designability evaluated by sensory evaluation, 10 viewers were asked for their impressions of each decorative sheet. The decorative sheet was evaluated as "Excellent" when 8 or more viewers replied that the decorative sheet had a good design and tactile sensation, and the decorative sheet was evaluated as "good" when 5 or more viewers replied that the decorative sheet had a good design and tactile sensation. In addition, the decorative sheet was evaluated as "fair" when less than 5 viewers replied that the decorative sheet had a good design and tactile sensation.

The ideal evaluation result for designability evaluated by sensory evaluation is "Excellent".

In the evaluation for designability evaluated based on unnaturalness due to pattern repetition, 10 viewers were asked for their impressions of each decorative sheet. The decorative sheet was evaluated as "Excellent" when 8 or more viewers replied that there was no unnaturalness due to a succession of the same pattern portions in the decorative sheet used in construction on a wall surface, the decorative sheet was evaluated as "good" when 5 or more viewers replied that there was no unnaturalness, and the decorative sheet was evaluated as "fair" when less than 5 viewers replied that there was no unnaturalness.

The ideal evaluation result for designability evaluated based on unnaturalness due to pattern repetition is the result obtained when 10 viewers replied that there was no unnaturalness due to a succession of the same pattern portions.

### <Curved surface conformity>

In the evaluation for curved surface conformity, each decorative sheet was used on each of curved surfaces with Φ400, Φ300, Φ200, and Φ100 in an environment at 25 [°C], and was evaluated based on the diameter of the decorative sheet in which no cracking or rebound occurred.

The decorative sheet was used on the curved surfaces using, as an adhesive, a modified silicon adhesive "Eflex Tile One" manufactured by Konishi Co., Ltd.

In the evaluation results for curved surface conformity in the tables, a decorative sheet having a lower value is usable on a curved surface with a higher curvature.

The ideal evaluation result for curved surface conformity is the result obtained when the diameter of the decorative sheet in which no cracking or rebound occurred was "Φ200".

### <Three-dimensional surface roughness skewness (Ssk)>

The three-dimensional surface roughness skewness (Ssk) was measured under measurement conditions with a cutoff value λc of 250 [µm] using a laser microscope with a 5× objective lens manufactured by Olympus Corporation.

The ideal evaluation result for three-dimensional surface roughness skewness (Ssk) is a value in the range of -0.5 or more and 2.0 or less.

### <Glossiness value>

The glossiness value was measured by setting the measurement angle to 60 [°] using a gloss meter manufactured by Horiba, Ltd.

The ideal evaluation result for a glossiness value is a glossiness value equivalent to the glossiness value of natural stone, that is, equivalent to the glossiness value of the decorative sheet of Reference Example.

### <Ink adhesion>

In the evaluation for ink adhesion, first, a sample was extracted from each decorative sheet to be evaluated, and 6 vertical slits at intervals of 2 [mm] and 6 horizontal slits at intervals of 2 [mm] were made on the surface of the extracted sample using a cutter to form 25 squares. Next, Cellotape (registered trademark) was strongly pressure bonded to a portion of the sample with the squares and an end of Cellotape was peeled off in one stroke at an angle of 45 [°], and the removal degree of ink in the portion with the squares was visually observed. The number of squares in which ink was removed was counted and represented as the number of squares/25.

The ideal evaluation result for ink adhesion is 0/25.

### <Weather resistance>

In the evaluation for weather resistance, first, a sample was extracted from each decorative sheet to be evaluated, and the extracted sample was subjected to a test using a sunshine weather meter manufactured by Suga Test Instruments Co., Ltd. In the test, the sample was left to stand for 1000H (hours), 2000H, 3000H, and 4000H in a mode in which it rained for the first 18 minutes out of 120 minutes. Then, the sample after the test was checked, and was evaluated for weather resistance based on the hours in which no fading was observed.

The ideal evaluation result for weather resistance is 4000H.

### <Scratch resistance>

In the evaluation for scratch resistance, first, a sample was extracted from each decorative sheet to be evaluated, and the tip of a pencil "Hi-uni" manufactured by Mitsubishi Pencil Company Limited was flattened using an abrasive paper. Then, a load of 750 [g] was applied to the pencil, and the pencil was pressed against the surface of the extracted sample to move at a speed of 0.8 [mm/s] over a distance of 7 [mm], and the hardness (pencil hardness) of the hardest pencil that caused no scratching on the surface of the sample was measured.

The ideal evaluation result for scratch resistance is 4H.

### <Fire resistance>

In the evaluation for fire resistance, first, a sealer for construction was applied to a standard gypsum board (incombustible or semi-combustible) and then dried. Next, an adhesive for construction was applied, followed by bonding of a sample of each decorative sheet to be evaluated. Then, the sample was dried in a desiccator for 48 hours or more. Furthermore, the sample was heated by a cone heater, and generated gas was subjected to ignition and combustion by a spark igniter. Then, the oxygen concentration of the gas subjected to combustion was measured, and the gross calorific value obtained during combustion (gross calorific value during combustion (MJ/m²)) was examined for evaluation. A material having a gross calorific value during combustion (MJ/m²) of 8.0 (MJ/m²) or less is an incombustible material certified as a fire prevention material.

The ideal evaluation result for fire resistance is 8.0 (MJ/m²) or less.

### <Printability>

In the evaluation for printability of each decorative sheet, the decorative sheet was evaluated as "Excellent" when the decorative sheet was capable of being subjected to printing under a wide variety of printing conditions, and the decorative sheet was evaluated as "good" when the decorative sheet was capable of being subjected to printing under limited conditions.

The ideal evaluation result for printability is "Excellent".

**[Table 1]**

| | Example 1 | Example 2 | Example 3 | Example 4 | Example 5 | Example 6 | Example 7 | Example 8 |
|---|---|---|---|---|---|---|---|---|
| Designability (sensory evaluation) | Good | Excellent | Good | Good | Good | Good | Good | Good |
| Designability (unnaturalness due to same pattern portions) | Good | Good | Good | Good | Good | Good | Good | Good |
| Curved surface conformity | Φ400 | Φ400 | Φ300 | Φ100 | Φ200 | Φ200 | Φ200 | Φ200 |
| Skewness (Ssk) | 0.2 | -0.3 | 0.1 | 0.1 | -0.1 | 0.2 | 0.0 | 0.2 |
| Glossiness value | 1.6 | 0.9 | 1.5 | 1.4 | 1.5 | 1.5 | 1.5 | 1.5 |
| Ink adhesion | 0/25 | 1/25 | 3/25 | 6/25 | 2/25 | 1/25 | 0/25 | 0/25 |
| Weather resistance | 500h | 500h | 500h | 500h | 300h | 300h | 400h | 500h |
| Scratch resistance | 4H | 4H | 2H | 3H | 3H | 3H | 3H | 3H |
| Gross calorific value during combustion (MJ/m²) | 12.1 | 12.4 | 11.8 | 12.2 | 10.9 | 13.0 | 12.6 | 11.9 |
| Printability | Good | Good | Good | Good | Good | Good | Good | Good |

**[Table 2]**

| | Example 9 | Example 10 | Example 11 | Example 12 | Comparative Example 1 | Comparative Example 2 | Reference Example |
|---|---|---|---|---|---|---|---|
| Designability (sensory evaluation) | Good | Good | Good | Good | Fair | Fair | Good |
| Designability (unnaturalness due to same pattern portions) | Good | Good | Excellent | Good | Good | Good | Excellent |
| Curved surface conformity | Φ400 | Φ400 | Φ400 | Φ400 | Φ400 | Φ400 | - |
| Skewness (Ssk) | 0.1 | 0.3 | 0.0 | 0.2 | -0.9 | 0.8 | 2.2 |
| Glossiness value | 1.4 | 1.6 | 1.5 | 1.5 | 10.5 | 3.5 | 1.3 |
| Ink adhesion | 0/25 | 0/25 | 0/25 | 3/25 | 0/25 | 3/25 | - |
| Weather resistance | 500h | 4000h | 500h | 500h | 500h | 500h | - |
| Scratch resistance | 4H | 4H | 4H | 4H | 4H | 2H | 9H or more |
| Gross calorific value during combustion (MJ/m²) | 7.2 | 9.8 | 11.2 | 12.8 | 12.3 | 11.6 | - |
| Printability | Good | Good | Good | Excellent | Good | Good | - |

In the evaluation of the decorative sheets for various performances using the methods described above, the decorative sheets of Examples 1 to 12 exhibited good performance for each of the evaluation items. On the other hand, the decorative sheets of Comparative Examples 1 and 2 did not exhibit good performance particularly for the three-dimensional surface roughness skewness (Ssk) and glossiness value.

### Second Examples

With reference to the first embodiment, decorative sheets of Examples 1 to 12, decorative sheets of Comparative Examples 1 and 2, and a decorative sheet of Reference Example will be described.

### (Example 1)

A substrate layer was formed using a glass nonwoven fabric having a basis weight of 48 [g/m²].

An aggregate layer was formed by adding an inorganic filler to an acrylic resin (acrylic emulsion) having a glass transition point of 60 [°C] so that the solid content weight ratio between the acrylic resin and the inorganic filler during drying was 10:90. A higher glass transition point indicates lower fluidity and higher hardness. On the other hand, a lower glass transition point indicates higher fluidity and higher flexibility.

The inorganic filler was composed of calcium carbonate (CaCO₃) having a particle size distribution in the range of 100 [µm] or more and 500 [µm] or less. The calcium carbonate having a particle size distribution in the above range was obtained by sieving calcium carbonate and collecting calcium carbonate particles that passed through a 500-µm mesh but did not pass through a 100-µm mesh.

After the aggregate layer was uniformly applied to the substrate layer and then dried to form a sheet having a thickness of 2.0 [mm], a print pattern layer was formed on the surface (aggregate layer) of the sheet by gravure offset printing using an organic pigment.

Furthermore, a pattern was formed on the print pattern layer using four types of patterns (see Fig. 2).

A surface protective layer having a thickness of 15 [µm] was formed using an acrylic resin.

Furthermore, the surface protective layer contained silica such that the mixing ratio of the silica with respect to 100 mass [%] of acrylic resin as a main component was 50 mass [%].

Thus, the decorative sheet of Example 1 was formed.

### (Example 2)

The decorative sheet of Example 2 was formed in the same manner as in Example 1 except that before drying was performed after application of the aggregate layer to the substrate layer, the aggregate layer was subjected to embossing processing using an embossing die made of silicone.

### (Example 3)

The decorative sheet of Example 3 was formed in the same manner as in Example 1 except that the aggregate layer was formed using an acrylic resin having a glass transition point of -7 [°C].

### (Example 4)

The decorative sheet of Example 4 was formed in the same manner as in Example 1 except that the aggregate layer was formed using an acrylic resin having a glass transition point of -62 [°C].

### (Example 5)

The decorative sheet of Example 5 was formed in the same manner as in Example 1 except that the thickness of the surface protective layer was 2 [µm].

### (Example 6)

The decorative sheet of Example 6 was formed in the same manner as in Example 1 except that the thickness of the surface protective layer was 3 [µm].

### (Example 7)

The decorative sheet of Example 7 was formed in the same manner as in Example 1 except that the thickness of the surface protective layer was 5 [µm].

### (Example 8)

The decorative sheet of Example 8 was formed in the same manner as in Example 1 except that the thickness of the surface protective layer was 10 [µm].

### (Example 9)

The decorative sheet of Example 9 was formed in the same manner as in Example 1 except that the inorganic filler was composed of calcium carbonate (CaCO₃) having a particle size distribution in the range of 50 [µm] or more and 500 [µm] or less and aluminum hydroxide (Al(OH)₃) having a particle size distribution in the range of 50 [µm] or more and 500 [µm] or less and that the calcium carbonate and the aluminum hydroxide were added to the acrylic resin such that the solid content weight ratio between the acrylic resin, the calcium carbonate, and the aluminum hydroxide during drying was 10:45:45. As with the calcium carbonate, the aluminum hydroxide having a particle size distribution in the above range was obtained by sieving aluminum hydroxide and collecting aluminum hydroxide particles that passed through a 500-µm mesh but did not pass through a 50-µm mesh.

### (Example 10)

The decorative sheet of Example 10 was formed in the same manner as in Example 1 except that the print pattern layer was formed using an organic pigment.

### (Example 11)

The decorative sheet of Example 11 was formed in the same manner as in Example 1 except that the pattern on the print pattern layer was formed using six types of patterns (see Fig. 3).

### (Example 12)

The decorative sheet of Example 12 was formed in the same manner as in Example 1 except that the print pattern layer was formed by inkjet printing.

### (Comparative Example 1)

The decorative sheet of Comparative Example 1 was formed in the same manner as in Example 1 except that the inorganic filler was composed of calcium carbonate having a particle size distribution in the range of 1 [µm] or more and 10 [µm] or less.

### (Comparative Example 2)

The decorative sheet of Comparative Example 2 was formed in the same manner as in Example 1 except that the inorganic filler was composed of calcium carbonate having a particle size distribution in the range of more than 500 [µm] and 1000 [µm] or less.

### (Reference Example)

The decorative sheet of Reference Example was formed using a cut natural stone.

### (Performance evaluation, evaluation results)

Each of the decorative sheets of Examples 1 to 12, the decorative sheets of Comparative Examples 1 and 2, and the decorative sheet of Reference Example was evaluated for designability, curved surface conformity, and surface kurtosis (Sku). In addition, the decorative sheets were evaluated for a glossiness value, ink adhesion, weather resistance, scratch resistance, fire resistance, and printability. The evaluation results are shown in Tables 1 and 2.

The evaluation was performed in the following manner.

### <Designability>

In the evaluation for designability, the decorative sheets were evaluated for designability evaluated by sensory evaluation and designability evaluated based on unnaturalness due to pattern repetition (unnaturalness caused by a succession of the same pattern portions).

In the evaluation for designability evaluated by sensory evaluation, 10 viewers were asked for their impressions of each decorative sheet. The decorative sheet was evaluated as "Excellent" when 8 or more viewers replied that the decorative sheet had a good design and tactile sensation, and the decorative sheet was evaluated as "good" when 5 or more viewers replied that the decorative sheet had a good design and tactile sensation. In addition, the decorative sheet was evaluated as "fair" when less than 5 viewers replied that the decorative sheet had a good design and tactile sensation.

The ideal evaluation result for designability evaluated by sensory evaluation is "Excellent".

In the evaluation for designability evaluated based on unnaturalness due to pattern repetition, 10 viewers were asked for their impressions of each decorative sheet. The decorative sheet was evaluated as "Excellent" when 8 or more viewers replied that there was no unnaturalness due to a succession of the same pattern portions in the decorative sheet used in construction on a wall surface, the decorative sheet was evaluated as "good" when 5 or more viewers replied that there was no unnaturalness, and the decorative sheet was evaluated as "fair" when less than 5 viewers replied that there was no unnaturalness.

The ideal evaluation result for designability evaluated based on unnaturalness due to pattern repetition is the result obtained when 10 viewers replied that there was no unnaturalness due to a succession of the same pattern portions.

### <Curved surface conformity>

In the evaluation for curved surface conformity, each decorative sheet was used on each of curved surfaces with Φ400, Φ300, Φ200, and Φ100 in an environment at 25 [°C], and was evaluated based on the diameter of the decorative sheet in which no cracking or rebound occurred.

The decorative sheet was used on the curved surfaces using, as an adhesive, a modified silicon adhesive "Eflex Tile One" manufactured by Konishi Co., Ltd.

In the evaluation results for curved surface conformity in the tables, a decorative sheet having a lower value is usable on a curved surface with a higher curvature.

The ideal evaluation result for curved surface conformity is the result obtained when the diameter of the decorative sheet in which no cracking or rebound occurred was "Φ200".

### <Surface kurtosis (Sku)>

The surface kurtosis (Sku) was measured under measurement conditions with a cutoff value λc of 250 [µm] using a laser microscope with a 5× objective lens manufactured by Olympus Corporation.

The ideal evaluation result for surface kurtosis (Sku) is a value in the range of 3.0 or more and 30 or less.

### <Glossiness value>

The glossiness value was measured by setting the measurement angle to 60 [°] using a gloss meter manufactured by Horiba, Ltd.

The ideal evaluation result for a glossiness value is a glossiness value equivalent to the glossiness value of natural stone, that is, equivalent to the glossiness value of the decorative sheet of Reference Example.

### <Ink adhesion>

In the evaluation for ink adhesion, first, a sample was extracted from each decorative sheet to be evaluated, and 6 vertical slits at intervals of 2 [mm] and 6 horizontal slits at intervals of 2 [mm] were made on the surface of the extracted sample using a cutter to form 25 squares. Next, Cellotape (registered trademark) was strongly pressure bonded to a portion of the sample with the squares and an end of Cellotape was peeled off in one stroke at an angle of 45 [°], and the removal degree of ink in the portion with the squares was visually observed. The number of squares in which ink was removed was counted and represented as the number of squares/25.

The ideal evaluation result for ink adhesion is 0/25.

### <Weather resistance>

In the evaluation for weather resistance, first, a sample was extracted from each decorative sheet to be evaluated, and the extracted sample was subjected to a test using a sunshine weather meter manufactured by Suga Test Instruments Co., Ltd. In the test, the sample was left to stand for 1000H (hours), 2000H, 3000H, and 4000H in a mode in which it rained for the first 18 minutes out of 120 minutes. Then, the sample after the test was checked, and was evaluated for weather resistance based on the hours in which no fading was observed.

The ideal evaluation result for weather resistance is 4000H.

### <Scratch resistance>

In the evaluation for scratch resistance, first, a sample was extracted from each decorative sheet to be evaluated, and the tip of a pencil "Hi-uni" manufactured by Mitsubishi Pencil Company Limited was flattened using an abrasive paper. Then, a load of 750 [g] was applied to the pencil, and the pencil was pressed against the surface of the extracted sample to move at a speed of 0.8 [mm/s] over a distance of 7 [mm], and the hardness (pencil hardness) of the hardest pencil that caused no scratching on the surface of the sample was measured.

The ideal evaluation result for scratch resistance is 4H.

### <Fire resistance>

In the evaluation for fire resistance, first, a sealer for construction was applied to a standard gypsum board (incombustible or semi-combustible) and then dried. Next, an adhesive for construction was applied, followed by bonding of a sample of each decorative sheet to be evaluated. Then, the sample was dried in a desiccator for 48 hours or more. Furthermore, the sample was heated by a cone heater, and generated gas was subjected to ignition and combustion by a spark igniter. Then, the oxygen concentration of the gas subjected to combustion was measured, and the gross calorific value obtained during combustion (gross calorific value during combustion (MJ/m²)) was examined for evaluation. A material having a gross calorific value during combustion (MJ/m²) of 8.0 (MJ/m²) or less is an incombustible material certified as a fire prevention material.

The ideal evaluation result for fire resistance is 8.0 (MJ/m²) or less.

### <Printability>

In the evaluation for printability of each decorative sheet, the decorative sheet was evaluated as "Excellent" when the decorative sheet was capable of being subjected to printing under a wide variety of printing conditions, and the decorative sheet was evaluated as "good" when the decorative sheet was capable of being subjected to printing under limited conditions.

The ideal evaluation result for printability is "Excellent".

**[Table 3]**

| | Example 1 | Example 2 | Example 3 | Example 4 | Example 5 | Example 6 | Example 7 | Example 8 |
|---|---|---|---|---|---|---|---|---|
| Designability (sensory evaluation) | Good | Excellent | Good | Good | Good | Good | Good | Good |
| Designability (unnaturalness due to same pattern portions) | Good | Good | Good | Good | Good | Good | Good | Good |
| Curved surface conformity | Φ400 | Φ400 | Φ300 | Φ100 | Φ200 | Φ200 | Φ200 | Φ200 |
| Kurtosis (Sku) | 8.33 | 10.5 | 6.5 | 7.8 | 8.2 | 8.5 | 6.2 | 9.2 |
| Glossiness value | 1.6 | 0.9 | 1.5 | 1.4 | 1.5 | 1.5 | 1.5 | 1.5 |
| Ink adhesion | 0/25 | 1/25 | 3/25 | 6/25 | 2/25 | 1/25 | 0/25 | 0/25 |
| Weather resistance | 500h | 500h | 500h | 500h | 300h | 300h | 400h | 500h |
| Scratch resistance | 4H | 4H | 2H | 3H | 3H | 3H | 3H | 3H |
| Gross calorific value during combustion (MJ/m²) | 12.1 | 12.4 | 11.8 | 12.2 | 10.9 | 13.0 | 12.6 | 11.9 |
| Printability | Good | Good | Good | Good | Good | Good | Good | Good |

**[Table 4]**

| | Example 9 | Example 10 | Example 11 | Example 12 | Comparative Example 1 | Comparative Example 2 | Reference Example |
|---|---|---|---|---|---|---|---|
| Designability (sensory evaluation) | Good | Good | Good | Good | Fair | Fair | Good |
| Designability (unnaturalness due to same pattern portions) | Good | Good | Excellent | Good | Good | Good | Excellent |
| Curved surface conformity | Φ400 | Φ400 | Φ400 | Φ400 | Φ400 | Φ400 | - |
| Kurtosis (Sku) | 8.3 | 8.7 | 6.9 | 7 | 2.6 | 17.8 | 22.5 |
| Glossiness value | 1.4 | 1.6 | 1.5 | 1.5 | 10.5 | 3.5 | 1.3 |
| Ink adhesion | 0/25 | 0/25 | 0/25 | 3/25 | 0/25 | 3/25 | - |
| Weather resistance | 500h | 4000h | 500h | 500h | 500h | 500h | - |
| Scratch resistance | 4H | 4H | 4H | 4H | 4H | 2H | 9H or more |
| Gross calorific value during combustion (MJ/m²) | 7.2 | 9.8 | 11.2 | 12.8 | 12.3 | 11.6 | - |
| Printability | Good | Good | Good | Excellent | Good | Good | - |

In the evaluation of the decorative sheets for various performances using the methods described above, the decorative sheets of Examples 1 to 12 exhibited good performance for each of the evaluation items. On the other hand, the decorative sheets of Comparative Examples 1 and 2 did not exhibit good performance particularly for the surface kurtosis (Sku) and glossiness value.

The present technique may be configured as follows.
(1) A decorative sheet including:
   a substrate layer;
   an aggregate layer that is laminated on one surface of the substrate layer;
   a print pattern layer that is laminated on a surface of the aggregate layer opposite to a surface of the aggregate layer facing the substrate layer; and
   a surface protective layer that is laminated on a surface of the print pattern layer opposite to a surface of the print pattern layer facing the aggregate layer, in which
   the aggregate layer contains a mixture of an acrylic resin and an inorganic filler such that a mixing ratio of the acrylic resin with respect to 100 mass% of the aggregate layer is in a range of 5 mass% or more and 15 mass% or less and a mixing ratio of the inorganic filler with respect to 100 mass% of the aggregate layer is in a range of 85 mass% or more and 95 mass% or less,
   the aggregate layer has a thickness in a range of 0.2 mm or more and 4.0 mm or less, and
   the inorganic filler contains a filler having a particle size distribution in a range of 50 µm or more and 500 µm or less.
(2) The decorative sheet according to (1), in which
   a surface of the surface protective layer opposite to a surface of the surface protective layer facing the print pattern layer has a three-dimensional surface roughness skewness (Ssk) in a range of -0.5 or more and 2.0 or less.
(3) The decorative sheet according to (1) or (2), in which
   a surface of the surface protective layer opposite to a surface of the surface protective layer facing the print pattern layer has a surface kurtosis (Sku) in a range of 3.0 or more and 30 or less.
(4) The decorative sheet according to any of (1) to (3), in which
   the aggregate layer, the print pattern layer, and the surface protective layer are subjected to embossing processing by debossing.
(5) The decorative sheet according to any of (1) to (4), in which
   the acrylic resin has a glass transition point in a range of -40°C or higher 10°C or lower.
(6) The decorative sheet according to any of (1) to (5), in which
   the surface protective layer contains, as a main component, acryl, fluorine, silicone, or a mixture or copolymer of at least two of acryl, fluorine, and silicone.
(7) The decorative sheet according to any of (1) to (6), in which
   the surface protective layer has a thickness in a range of 3 µm or more and 10 µm or less.
(8) The decorative sheet according to any of (1) to (7), in which
   at least one of components of the inorganic filler is a hydrate.
(9) The decorative sheet according to any of (1) to (7), in which
   the print pattern layer contains an epoxy resin as a main component, and contains an inorganic pigment such that a mixing ratio of the inorganic pigment with respect to 100 mass% of the epoxy resin is 15 mass% or less.
(10) The decorative sheet according to any of (1) to (9), in which
   a pattern is formed by printing on the print pattern layer, and
   the pattern is composed of at least three types of different patterns formed based on image data produced using a natural stone pattern.
(11) The decorative sheet according to (10), in which
   the pattern is composed of six or more types of different patterns formed based on the image data.
(12) The decorative sheet according to any of (1) to (11), in which
   the print pattern layer is formed by inkjet printing.
(13) A decorative material including:
   a substrate; and
   the decorative sheet according to any of (1) to (12) that is laminated on at least one surface of the substrate.

### [Reference Signs List]

- 1: Decorative sheet,
- 2: Substrate layer,
- 3: Aggregate layer,
- 4: Print pattern layer,
- 5: Surface protective layer,
- 6: Embossed portion,
- 7: Substrate,
- 10: Decorative material

## Claims

1. A decorative sheet comprising:
a substrate layer;
an aggregate layer that is laminated on one surface of the substrate layer;
a print pattern layer that is laminated on a surface of the aggregate layer opposite to a surface of the aggregate layer facing the substrate layer; and
a surface protective layer that is laminated on a surface of the print pattern layer opposite to a surface of the print pattern layer facing the aggregate layer, wherein
the aggregate layer contains a mixture of an acrylic resin and an inorganic filler such that a mixing ratio of the acrylic resin with respect to 100 mass% of the aggregate layer is in a range of 5 mass% or more and 15 mass% or less and a mixing ratio of the inorganic filler with respect to 100 mass% of the aggregate layer is in a range of 85 mass% or more and 95 mass% or less,
the aggregate layer has a thickness in a range of 0.2 mm or more and 4.0 mm or less, and
the inorganic filler contains a filler having a particle size distribution in a range of 50 µm or more and 500 µm or less.

2. The decorative sheet according to claim 1, wherein
a surface of the surface protective layer opposite to a surface of the surface protective layer facing the print pattern layer has a three-dimensional surface roughness skewness (Ssk) in a range of -0.5 or more and 2.0 or less.

3. The decorative sheet according to claim 1 or 2, wherein
a surface of the surface protective layer opposite to a surface of the surface protective layer facing the print pattern layer has a surface kurtosis (Sku) in a range of 3.0 or more and 30 or less.

4. The decorative sheet according to any one of claims 1 to 3, wherein
the aggregate layer, the print pattern layer, and the surface protective layer are subjected to embossing processing by debossing.

5. The decorative sheet according to any one of claims 1 to 4, wherein
the acrylic resin has a glass transition point in a range of -40°C or higher 10°C or lower.

6. The decorative sheet according to any one of claims 1 to 5, wherein
the surface protective layer contains, as a main component, acryl, fluorine, silicone, or a mixture or copolymer of at least two of acryl, fluorine, and silicone.

7. The decorative sheet according to any one of claims 1 to 6, wherein
the surface protective layer has a thickness in a range of 3 µm or more and 10 µm or less.

8. The decorative sheet according to any one of claims 1 to 7, wherein
at least one of components of the inorganic filler is a hydrate.

9. The decorative sheet according to any one of claims 1 to 7, wherein
the print pattern layer contains an epoxy resin as a main component, and contains an inorganic pigment such that a mixing ratio of the inorganic pigment with respect to 100 mass% of the epoxy resin is 15 mass% or less.

10. The decorative sheet according to any one of claims 1 to 9, wherein
a pattern is formed by printing on the print pattern layer, and
the pattern is composed of at least three types of different patterns formed based on image data produced using a natural stone pattern.

11. The decorative sheet according to claim 10, wherein
the pattern is composed of six or more types of different patterns formed based on the image data.

12. The decorative sheet according to any one of claims 1 to 11, wherein
the print pattern layer is formed by inkjet printing.

13. A decorative material comprising:
a substrate; and
the decorative sheet according to any one of claims 1 to 12 that is laminated on at least one surface of the substrate.
